# EUROPEAN PATENT APPLICATION

(11) **EP 2 222 139 A2**
(43) Date of publication of application: **25.08.2010**
(21) Application number: 09014644.0
(22) Date of filing: 24.11.2009
(51) Int. Cl.: H05B 41/04

(54) **Lamp lighting device and projector type picture display device using same**

(30) Priority: 26.11.2008 JP 2008300959
(71) Applicant: Sanyo Electric Co., Ltd., Osaka 570-8677 (JP)
(72) Inventor: Ooura, Toshiya, Moriguchi-shi Osaka 570-8677 (JP)
(74) Representative: Glawe, Delfs, Moll

(57) **Abstract**

Lamp lighting device (1) serves to light up a selected one of two high pressure mercury lamps (9, 10), and includes a starting pulse generating circuit (13) for outputting a starting pulse voltage (VP); two step-up transformers (7, 8) having secondary windings (7b, 8b) connected to trigger windings (9a, 10a) of the lamps (9, 10) respectively; an inverter (12) for outputting an alternating-current voltage (VAC); and relays (5, 6) each for providing the starting pulse voltage (VP) to a primary winding (7a) of a step-up transformer (7) corresponding to the selected lamp (9), and each for providing the alternating-current voltage (VAC) to main electrodes (9b, 9c) of the selected lamp (9) Since the step-up transformers (7, 8) are provided at stages coming after the relays (5, 6) as such, relays (5, 6) with low breakdown voltage can be used.

## Description

### BACKGROUND OF THE INVENTION

### Field of the Invention

The present invention relates to a lamp lighting device and a projector type picture display device using such a lamp lighting device, in particular, a lamp lighting device for lighting up a selected one of a plurality of discharge lamps, and a projector type picture display device using such a lamp lighting device.

### Description of the Background Art

Conventionally, there is a liquid crystal projector having one power source, two halogen lamps, and a switching circuit. In the liquid crystal projector, one of the two halogen lamps and the power source are connected to each other by the switching circuit. When the halogen lamp is dead, the switching circuit connects the other halogen lamp to the power source. Thus, in the liquid crystal projector, the halogen lamps can be switched readily and promptly (for example, see Japanese Patent Laying-Open No. 4-104583).

In recent years, in liquid crystal projectors, halogen lamps are being replaced with discharge lamps such as high pressure mercury lamps. This is because a discharge lamp, which employs arc discharge, provides higher brightness, consumes less power, and has a longer life than a halogen lamp, which employs a filament. Also in such a liquid crystal projector employing discharge lamps, two discharge lamps and a switching circuit are desirably provided to achieve easy and prompt switching between the discharge lamps, as with the above-described patent document.

However, a discharge lamp is provided with a trigger electrode for applying a pulse of high voltage to start discharge, and a main electrode for applying an alternating-current voltage to maintain the discharge. In order to provide a high voltage to a selected one of two discharge lamps, a switching circuit with high breakdown voltage needs to be used. This may result in upsizing, increased cost, and decreased reliability of the switching circuit.

### SUMMARY OF THE INVENTION

In view of this, a main object of the present invention is to provide a small, low-cost, and highly reliable lamp lighting device capable of lighting up a selected one of a plurality of discharge lamps, and a projector type picture display device using such a lamp lighting device.

A lamp lighting device according to the present invention serves to light up a selected discharge lamp of a plurality of discharge lamps each having a trigger electrode and a main electrode, and includes: a pulse generating circuit outputting a starting pulse voltage; a plurality of step-up circuits, respectively provided corresponding to the plurality of discharge lamps and each having an output terminal connected to a trigger electrode of a corresponding discharge lamp, and each stepping up a voltage received at its input terminal and outputting the voltage to the output terminal; an alternating-current power source outputting an alternating-current voltage; and a switching circuit providing the starting pulse voltage output from the pulse generating circuit, to an input terminal of a step-up circuit corresponding to the selected discharge lamp, and providing the alternating-current voltage output from the alternating-current power source, to a main electrode of the selected discharge lamp.

Preferably, the switching circuit includes a plurality of relays provided corresponding to the plurality of discharge lamps respectively. Each of the relays has a first switch, which is connected between an output terminal of the pulse generating circuit and an input terminal of its corresponding step-up circuit and becomes conductive when its corresponding discharge lamp is selected; and a second switch, which is connected between an output terminal of the alternating-current power source and a main electrode of its corresponding discharge lamp and becomes conductive when its corresponding discharge lamp is selected.

Further, a projector type picture display device according to the present invention includes: the above-described lamp lighting device; the plurality of discharge lamps; and picture display unit displaying a picture on a screen using light from the selected discharge lamp.

In the lamp lighting device according to the present invention, the output terminals of the plurality of step-up circuits are respectively connected to the trigger electrodes of the plurality of discharge lamps, and the switching circuit is provided to provide the input terminal of the step-up circuit corresponding to the selected discharge lamp with the starting pulse voltage output from the pulse generating circuit, and provide the main electrode of the selected discharge lamp with the alternating-current voltage output from the alternating-current power source. As such, each step-up circuit is provided at a stage coming after the switching circuit, and a switching circuit with low breakdown voltage can be therefore used, thus achieving downsizing, reduced cost, and improved reliability of the device.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a circuit block diagram showing a configuration of a lamp lighting device according to one embodiment of the present invention.
Fig. 2 is a block diagram showing a configuration of a lamp voltage generating circuit shown in Fig. 1.
Fig. 3 shows a major portion of a liquid crystal projector including two high pressure mercury lamps and the lamp lighting device shown in Fig. 1.

### DESCRIPTION OF THE PREFERRED EMBODIMENTS

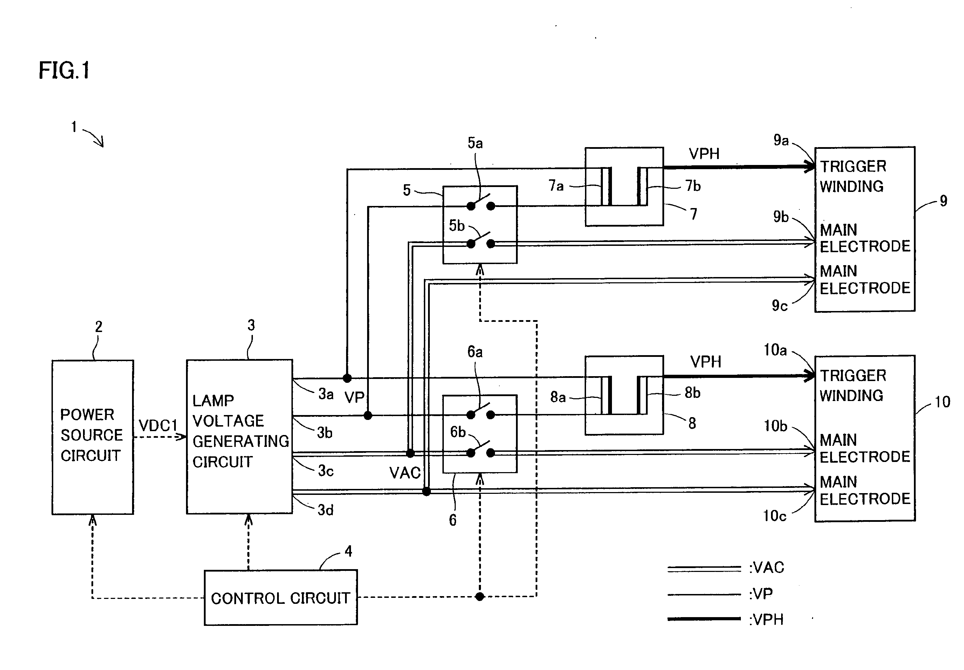

Fig. 1 is a circuit block diagram showing a configuration of a lamp lighting device 1 according to one embodiment of the present invention. In Fig. 1, lamp lighting device 1 includes a power source circuit 2, a lamp voltage generating circuit 3, a control circuit 4, relays 5, 6, and step-up transformers 7, 8, and serves to light up a selected one of two high pressure mercury lamps 9, 10.

High pressure mercury lamp 9 includes a luminous tube having mercury and argon gas filled therein, a trigger winding 9a wound around the luminous tube, and a pair of main electrodes 9b, 9c provided to opposite to each other in the luminous tube. Similarly, high pressure mercury lamp 10 includes a luminous tube, a trigger winding 10a, and a pair of main electrodes 10b, 10c. When a high voltage is applied to trigger windings 9a, 10a, glow discharge is started in the luminous tube. When an alternating-current voltage is applied between the pair of main electrodes 9b, 9c or between the pair of main electrodes 10b, 10c, the glow discharge is shifted to arc discharge and light resulting from the arc discharge is emitted from the luminous tube.

Power source circuit 2 is controlled by control circuit 4, and converts a commercial alternating-current voltage to a direct-current voltage VDC1 of 300-400 V. Lamp voltage generating circuit 3 is controlled by control circuit 4, and outputs a starting pulse voltage VP for starting discharge of high pressure mercury lamps 9, 10, and an alternating-current voltage VAC for maintaining the discharge.

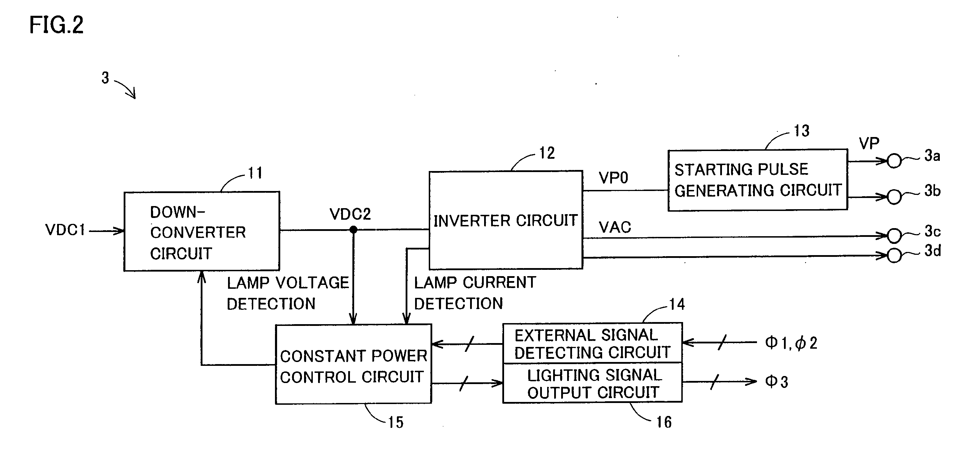

More specifically, as shown in Fig. 2, lamp voltage generating circuit 3 includes a down-converter circuit 11, an inverter circuit 12, a starting pulse generating circuit 13, an external signal detecting circuit 14, a constant power control circuit 15, a lighting signal output circuit 16, and output terminals 3a-3d.

Down-converter circuit 11 is controlled by constant power control circuit 15, and steps down the direct-current voltage generated by power source circuit 2, to generate a direct-current voltage VDC2 (lamp voltage) of 50-120 V. Inverter circuit 12 generates a pulse voltage VP0 of 210-230 V and provides it to starting pulse generating circuit 13, and converts voltage VDC2 output from down-converter circuit 11 into alternating-current voltage VAC (rectangular wave) for driving a lamp, and outputs alternating-current voltage VAC between output terminals 3c, 3d. In response to pulse voltage VP0 from inverter circuit 12, starting pulse generating circuit 13 generates starting pulse voltage VP, and outputs starting pulse voltage VP between output terminals 3a, 3b.

External signal detecting circuit 14 detects a signal φ1 supplied from control circuit 4 to instruct turning on/off of a lamp, and a signal φ2 supplied from control circuit 4 to set a power of the lamp, and provides constant power control circuit 15 with signals φ1, φ2 thus detected.

Upon lighting up high pressure mercury lamps 9, 10, the lamp voltage varies greatly and characteristics thereof also vary greatly with passage of time. To accommodate this, constant power control circuit 15 detects lamp voltage VDC2, receives from inverter circuit 12 information indicating the lamp current, and controls down-converter circuit 11 to maintain a fixed power consumption of the lamp even when lamp voltage VDC2 varies. In addition, constant power control circuit 15 outputs a signal φ3 indicating whether or not the lamp is lit up, a power, a voltage, and the like. Lighting signal output circuit 16 sends signal φ3 to control circuit 4 or the like. Thus, whether or not the lamp is lit up, the power, the voltage, and the like can be monitored.

Referring to Fig. 1 again, control circuit 4 controls power source circuit 2, lamp voltage generating circuit 3, and relays 5, 6. Relay 5 controlled by control circuit 4 includes switches 5a, 5b. Relay 6 controlled by control circuit 4 includes switches 6a, 6b. Step-up transformer 7 includes a primary winding 7a and a secondary winding 7b. Step-up transformer 8 includes a primary winding 8a and a secondary winding 8b. Each of step-up transformers 7, 8 steps up starting pulse voltage VP of 210-230 V and outputs a high voltage pulse VPH of 7-10 KV.

Output terminal 3a of lamp voltage generating circuit 3 is connected to the input terminal of primary winding 7a of step-up transformer 7 and the input terminal of primary winding 8a of step-up transformer 8. Output terminal 3b of lamp voltage generating circuit 3 is connected to the common terminal of windings 7a, 7b of step-up transformer 7 via switch 5a of relay 5, and is connected to the common terminal of windings 8a, 8b of step-up transformer 8 via switch 6a of relay 6. The output terminal of secondary winding 7b of step-up transformer 7 is connected to trigger winding 9a of high pressure mercury lamp 9, and the output terminal of secondary winding 8b of step-up transformer 8 is connected to trigger winding 10a of high pressure mercury lamp 10.

Output terminal 3c of lamp voltage generating circuit 3 is connected to main electrode 9b of high pressure mercury lamp 9 via switch 5b of relay 5, and is connected to main electrode 10b of high pressure mercury lamp 10 via switch 6b of relay 6. Output terminal 3d of lamp voltage generating circuit 3 is directly connected to main electrode 9c of high pressure mercury lamp 9, and is directly connected to main electrode 10c of high pressure mercury lamp 10.

Next, operations of lamp lighting device 1 will be described. When high pressure mercury lamp 9 is selected from high pressure mercury lamps 9, 10, switches 5a, 5b of relay 5 become conductive, and switches 6a, 6b of relay 6 become non-conductive. Starting pulse voltage VP generated by lamp voltage generating circuit 3 is provided to primary winding 7a of step-up transformer 7 via switch 5a of relay 5, to generate high voltage pulse VPH at secondary winding 7b. When high voltage pulse VPH is applied to trigger winding 9a of high pressure mercury lamp 9, high pressure mercury lamp 9 starts to discharge. Meanwhile, alternating-current voltage VAC generated by lamp voltage generating circuit 3 is applied between main electrodes 9b, 9c of high pressure mercury lamp 9 via switch 5b of relay 5. This maintains the discharge of high pressure mercury lamp 9, and light resulting from the discharge is emitted accordingly.

On the other hand, when high pressure mercury lamp 10 is selected from high pressure mercury lamps 9, 10, switches 6a, 6b of relay 6 become conductive and switches 5a, 5b of relay 5 become non-conductive. Starting pulse voltage VP generated by lamp voltage generating circuit 3 is provided to primary winding 8a of step-up transformer 8 via switch 6a of relay 6, to generate high voltage pulse VPH at secondary winding 8b. When high voltage pulse VPH is applied to trigger winding 10a of high pressure mercury lamp 10, high pressure mercury lamp 10 starts to discharge. Meanwhile, alternating-current voltage VAC generated by lamp voltage generating circuit 3 is applied between main electrodes 10b, 10c of high pressure mercury lamp 10 via switch 6b of relay 6. This maintains the discharge of high pressure mercury lamp 10, and light resulting from the discharge is emitted accordingly.

In this embodiment, one of two high pressure mercury lamps 9, 10 can be lit up selectively. Hence, when for example, high pressure mercury lamp 9 currently used is dead, high pressure mercury lamp 9 can be readily and promptly switched to new high pressure mercury lamp 10.

Further, step-up transformers 7, 8 are provided at stages coming after relays 5, 6. Hence, relays 5, 6 with low breakdown voltage can be used. Thus, small and low-cost relays 5, 6 can be used, and are not broken by high voltage nevertheless. In this way, downsizing, reduced cost, and improved reliability of the device can be achieved.

It should be noted that this embodiment deals with the case of lighting up high pressure mercury lamps 9, 10, but the present invention is applicable to a case of lighting up discharge lamps such as extra high pressure mercury lamps, metal halide lamps, and xenon lamps, each of which has a trigger winding (or trigger electrode, auxiliary electrode) and main electrodes.

It should be also noted that a selected one of two high pressure mercury lamps 9, 10 is lit up in this embodiment but the present invention is applicable to a case of lighting up a selected one of three or more high pressure mercury lamps. In this case, a step-up transformer and a relay are provided for each high pressure mercury lamp.

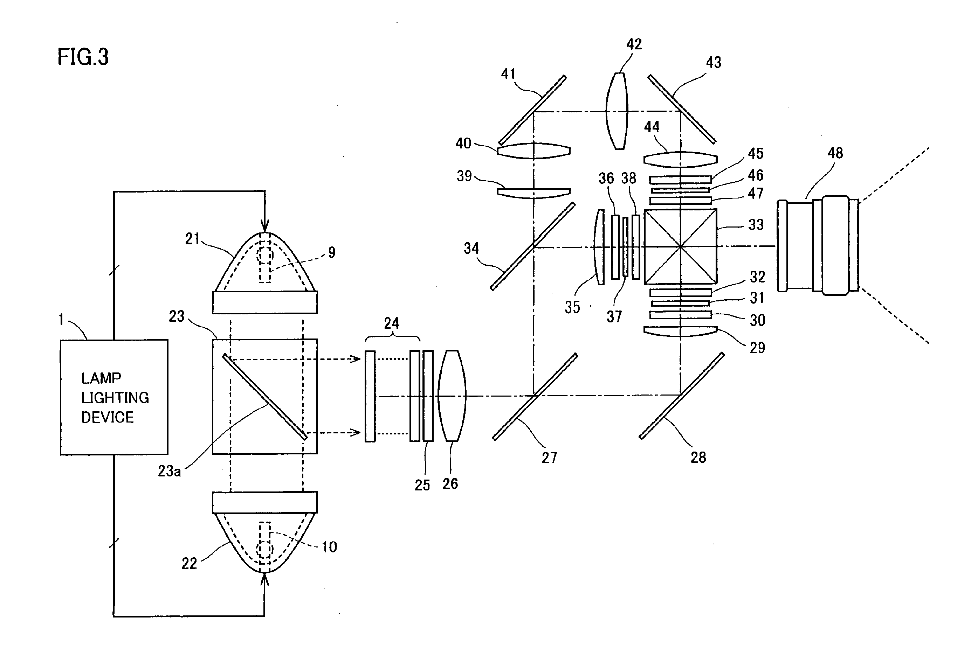

Fig. 3 shows a major portion of a liquid crystal projector having two high pressure mercury lamps 9, 10, and lamp lighting device 1 shown in Fig. 1 and Fig. 2. In Fig. 3, beams of light emitted from high pressure mercury lamp 9 are converted by a reflector 21 into substantially parallel light beams and enter a mirror unit 23. Likewise, beams of light emitted from high pressure mercury lamp 10 are converted by a reflector 22 into substantially parallel light beams and enter mirror unit 23.

In mirror unit 23, a mirror 23a is rotatably provided. When lamp 9 is used, mirror 23a is rotated to lead the beams of light from lamp 9 to a fly's-eye integrator 24, whereas when lamp 10 is used, it is rotated to lead the beams of light from lamp 10 to fly's-eye integrator 24. Fig. 3 shows a case where lamp 9 is used.

The beams of light from lamp 9 pass through fly's-eye integrator 24, and enter a PBS (polarization beam splitter) array 25 and a condenser lens 26. Fly's-eye integrator 24 includes two fly-eye's lenses constituted by a group of lenses in the form of a fly's eye, and provides an optical effect to the beams of light from lamp 9 to attain uniform distribution in the amount of light when the beams enter liquid crystal panels 31, 37, 46.

In PBS array 25, a plurality ofPBSs and 1/2 wave plates are provided in the form of an array. PBS array 25 aligns, in one direction, the polarization directions of the beams of light having come from fly's-eye integrator 24. Condenser lens 26 provides a beam gathering effect to the beams of light having come from PBS array 25. The beams of light having passed through condenser lens 26 enter a dichroic mirror 27.

Dichroic mirror 27 only permits passage of light beams in the wavelength range of blue color (hereinafter, referred to as "B light beams") among the beams of light from condenser lens 26, and reflects light beams in the wavelength range of red color (hereinafter, referred to as "R light beams") and light beams in the wavelength range of green color (hereinafter, referred to as "G light beams"). The B light beams having passed through dichroic mirror 27 are reflected by mirror 28 and enter a condenser lens 29.

Condenser lens 29 provides an optical effect to the B light beams to convert them into substantially parallel light beams and allow them to enter liquid crystal panel 31. The B light beams having passed through condenser lens 29 enter liquid crystal panel 31 through an incoming side polarizing plate 30. Liquid crystal panel 31 is driven according to a blue color picture signal to modulate the B light beams. The B light beams thus modulated by liquid crystal panel 31 enter a dichroic prism 33 through an outgoing side polarizing plate 32.

The R light beams and G light beams reflected by dichroic mirror 27 enter a dichroic mirror 34. Dichroic mirror 34 only permits passage of the R light beams of the beams of light from dichroic mirror 27, and reflects the G light beams. The G light beams thus reflected by dichroic mirror 34 enter a condenser lens 35.

Condenser lens 35 provides an optical effect to the G light beams to convert them into substantially parallel light beams and allow them to enter liquid crystal panel 37. The G light beams having passed through condenser lens 35 enter liquid crystal panel 37 through an incoming side polarizing plate 36. Liquid crystal panel 37 is driven according to a green color picture signal to modulate the G light beams. The G light beams thus modulated by liquid crystal panel 37 enter dichroic prism 33 through an outgoing side polarizing plate 38.

The R light beams having passed through dichroic mirror 34 enter a condenser lens 39. Condenser lens 39 provides an optical effect to the R light beams to convert them into substantially parallel light beams and allow them to enter liquid crystal panel 46. The R light beams having passed through condenser lens 39 travel in an optical path constituted by relay lenses 40, 42, 44 for adjusting the length of the optical path as well as two mirrors 41, 43, and enter liquid crystal panel 46 via an incoming side polarizing plate 45. Liquid crystal panel 46 is driven according to a red color picture signal to modulate the R light beams. The R light beams thus modulated by liquid crystal panel 46 enter dichroic prism 33 through an outgoing side polarizing plate 47.

Dichroic prism 33 combines the colors of the beams of light, i.e., the B light beams, G light beams, and R light beams respectively modulated by liquid crystal panels 31, 37, 46, and causes the combined beams of light to enter a projector lens 48. Projector lens 48 includes a group of lenses for joining the projected beams of light onto a projection target surface, and an actuator for displacing a part of the group of lenses in the direction of the optical axis to adjust zoom and focus states of the projected picture. The beams of light resulting from the color combination by dichroic prism 33 are enlarged and projected by projector lens 48 onto a screen (not shown).

When high pressure mercury lamp 9 is dead, lamp lighting device 1 lights up high pressure mercury lamp 10, and mirror 23 a is rotated to the lamp 10 side. Thus, the lamps can be switched readily and promptly. Further, when high pressure mercury lamp 9 is not dead but lamp 9 has been used longer than a predetermined period of time, lamp 9 may be switched to lamp 10.

Although the present invention has been described and illustrated in detail, it is clearly understood that the same is by way of illustration and example only and is not to be taken by way of limitation, the scope of the present invention being interpreted by the terms of the appended claims.

## Claims

1. A lamp lighting device lighting up a selected discharge lamp of a plurality of discharge lamps (9, 10) each having a trigger electrode and a main electrode, comprising:
a pulse generating circuit (13) outputting a starting pulse voltage;
a plurality of step-up circuits (7, 8), respectively provided corresponding to said plurality of discharge lamps (9, 10), each having an output terminal connected to a trigger electrode of a corresponding discharge lamp, and each stepping up a voltage received at its input terminal and outputting the voltage to said output terminal;
an alternating-current power source (12) outputting an alternating-current voltage; and
a switching circuit (5, 6) providing the starting pulse voltage output from said pulse generating circuit (13), to an input terminal of a step-up circuit corresponding to said selected discharge lamp, and providing the alternating-current voltage output from said alternating-current power source (12), to a main electrode of said selected discharge lamp.

2. The lamp lighting device according to claim 1, wherein:
said switching circuit (5, 6) includes a plurality of relays (5, 6) provided corresponding to said plurality of discharge lamps (9, 10) respectively, and
each of the relays (5 or 6) has:
a first switch (5a or 6a), which is connected between an output terminal of said pulse generating circuit and an input terminal of its corresponding step-up circuit and becomes conductive when its corresponding discharge lamp is selected, and
a second switch (5b or 6b), which is connected between an output terminal of said alternating-current power source (12) and a main electrode of its corresponding discharge lamp and becomes conductive when its corresponding discharge lamp is selected.

3. A projector type picture display device, comprising:
the lamp lighting device (1) according to claim 1;
said plurality of discharge lamps (9, 10); and
a picture display unit (21 - 48) displaying a picture on a screen using light from said selected discharge lamp.
